# EUROPEAN PATENT SPECIFICATION

(11) **EP 2 429 729 B1**
(45) Date of publication and mention of the grant of the patent: **13.11.2013**
(21) Application number: 10721434.8
(22) Date of filing: 11.05.2010
(51) Int. Cl.: B09C 1/00, B09C 1/10

(54) **USE OF CISTUS LIBANOTIS TO CLEAN SOILS CONTAINING HEAVY METALS**
VERWENDUNG VON CISTUS LIBANOTIS ZUR REINIGUNG VON ERDBODEN, DER SCHWERMETALLE ENTHÄLT
UTILISATION DE CISTUS LIBANOTIS POUR LE NETTOYAGE DE SOLS CONTENANT DES MÉTAUX LOURDS

(30) Priority: 12.05.2009 EP 09305421
(43) Date of publication of application: 21.03.2012
(73) Proprietor: Institut De Recherche Pour Le Développement (IRD), 13002 Marseille 2 (FR); Université Mohammed V - Agdal - Maroc (Faculté des sciences de Rabat), Rabart (MA); Université Abdelmalek Essaâdi (Faculté des Sciences de Tétouan), Martil (MA); Centre National de l'Energie, des Sciences et des Techniques Nucléaires (CNESTEN), 10001 Rabat (MA)
(72) Inventor: LAPLAZE, Laurent, F-34170 Castelnau-le-Lez (FR); DOUMAS, Patrick, F-34080 Montpellier (FR); SMOUNI, Abdelaziz, Rabat 10000 (MA); BRHADA, Fatiha, Rabat 10100 (MA); ATER, Mohamed, Tetouan 93002 (MA)
(74) Representative: Cabinet Plasseraud
(86) International application number: PCT/EP2010/056449
(87) International publication number: WO 2010/130730

(56) References cited:
- US-A- 5 364 451
- HIDEO TAMURA, MUNECHIKA HONDA, TAKESHI SATO, HIROYUKI KAMACHI: "Pb hyperaccumulation and tolerance in common buckwheat (Fagopyrum esculentum Moench)" JOURNAL OF PLANT RESEARCH, vol. 118, 22 September 2005 (2005-09-22), pages 355-359, XP002559197 Tokyo
- P.M. ALVARENGA, M.F. ARAUJO, J.A.L.SILVA: "Elemental uptake and root-leaves transfer in Cistus Ladanifer L. growing in a contaminated Pyrite Mining Area (Aljustrel-Portugal)" WATER,AIR, AND SOIL POLLUTION, vol. 152, 2004, pages 81-96, XP002559198 Netherlands

## Description

The present application claims priority to European Patent Application No. EP 09 305 421.1 filed on May 12, 2009. The European patent application is incorporated herein by reference in its entirety.

### Background of the Invention

Although not a new phenomenon, pollution has increased in magnitude over time and has become a real problem due to its effects on the environment and the potential risks to human health.

Toxic metal ion pollution is perhaps one of the most difficult environmental problems, since unlike organic compounds, which can be degraded in the soil, metals are essentially non-mutable. Sources of metals in the environment originate from both natural geochemical processes and human activities (such as metal smelting industry, residues from metalliferous mining, combustion of fossil fuel, agricultural use of pesticides, fertilizers and sewage sludges). Heavy metals, such as cadmium, chromium, copper, lead, arsenic, mercury, nickel and zinc, have reached toxic levels in the air, land and water in many parts of the world. Furthermore, wind and/or rain can sometimes disperse metal contaminants at great distance from their points of use, production or disposal, which significantly increases the possibility of endangering wildlife and ecosystems not initially affected. Soil contamination by heavy metals is thus of great concern worldwide. In particular, lead is one of the most harmful heavy metal contaminants. Lead is widely used in the industrial field and its extraction and treatment provide heavy metal containing residues, which are generally not removed. Those wastes have increased the concentration of toxic metals in the environment and are responsible for health and environmental issues.

Soil clean-up strategies that have been developed and are currently used involve civil engineering practices such as capping, excavation, soil washing, thermal treatment, and chemical treatment. These methods are generally very expensive and invasive, destroying soil structure, fertility and productivity. The development of alternative, economically efficient, remediation technologies is hence of interest.

In recent years, phytoremediation methods have been developed. These methods use the fact that plants require at least 17 elements to complete their life cycles, including the heavy metals copper (Cu), zinc (Zn), and nickel (Ni); and accumulate nonessential metals, such as lead (Pb), when these are present in the environment. Thus, phytoremediation involves removing heavy metals from the environment by growing a plant that absorbs and accumulates heavy metals present in the soil and then harvesting and removing the plant.

There are at least 400 known metal hyper-accumulator plants in the world; however, only a limited number of these are lead hyper-accumulators. For example, the following plants are known for their use in lead phytoextraction: *Brassica juncea, Brassica napus, Helianthus annuus, Thlaspi caerulescens* and *Fagopyrum esculentem.* U.S. Pat. No. 5,364,451 discloses the use of plants of the Brassicaceae family in a process for removing metal ions such as lead and chromium from soils. Tamura et al. (J. Plant Res., 2005, 118: 355-359) have described the use of *Fagopyrum esculentem* for lead phytoremediation according to the preamble of claim 4.

However, some lead-hyperaccumular plants, such as *Thlapsi rotundifolium,* have small biomass and a slow growth rate, which make them unsuitable for phytoremediation. In addition, plants such as Brassicaceae are annual plants and thus exhibit the drawback of requiring repeated cycles of planting and harvesting entire plants in order to fully decontaminate the same area of land.

Thus, there is a need in the art for an alternative, improved method for lead specific-phytoremediation.

### Summary of the Invention

The inventors have found that *Cistus libanotis*, one of the species of the genus (*Cistus*) of flowering plants in the rockrose family *Cistaceae*, has a high ability to specifically accumulate lead. Furthermore, *Cistus libanotis* presents the great advantage of being perennial.

Consequently, one object of the invention is the use of *Cistus libanotis* for lead phytoremediation.

In one embodiment, *Cistus libanotis* is used for lead phytoextraction.

In another embodiment, *Cistus libanotis* is used for lead phytostabilization.

Another embodiment is a phytoremedication method comprising absorbing a heavy metal contained in a contaminated medium (for example a contaminated soil) by using a metal-hyperaccumulator plant to clean the medium, wherein the heavy metal is lead and the metal-hyperaccumulator plant is *Cistus libanotis*.

In one embodiment of the invention, the contaminated medium is a contaminated soil and the lead content in the heavy metal containing soil is higher than 50 mg/kg.

In one embodiment of the invention, the *Cistus libanotis* plant that has accumulated lead is harvested and incinerated.

In another embodiment of the invention, the ashes obtained by incineration of said plant are treated by vitrification with a plasma arc.

The present invention also provides a phytoremediation method comprising a step of: growing a *Cistus libanotis* plant in a contaminated medium containing an excessive amount of lead under conditions where the plant accumulates lead, whereby the lead content of the medium is decreased. In certain embodiments, the contaminated medium is a contaminated soil and the lead content of the contaminated soil is higher than 50 mg/kg.

In certain embodiments, the *Cistus libanotis* plant is grown from a seed, which, prior to germination, has been incubated in water at 100°C for 1 hour with occasional shaking. This treatment at high temperature significantly enhances germination.

In certain embodiments, the phytoremediation method further comprises a step of adding a biodegradable chelating agent to the contaminated medium in which the *Cistus libanotis* plant is grown. The biodegradable chelating agent may be selected from the group consisting of methylglycine diacetate (MGDA), ethylene succinic acid (EDTS), L-glutamic acid diacetate (GLDA), L-aspartic acid diacetate (ASDA), any salt thereof, and any mixture thereof.

In certain embodiments, the phytoremediation method further comprises a step of harvesting the *Cistus libanotis* plant that has accumulated lead. Preferably, at harvest time, the *Cistus libanotis* plant has accumulated a concentration of lead of at least 1000 mg/kg.

In certain embodiments, the phytoremediation method further comprises steps of: incinerating the harvested *Cistus libanotis* plant thereby obtaining ashes lead; and treating the ashes obtained. For example, the ashes obtained may be treated by vitrification with a plasma arc in order to render the lead inert.

These and other objects, advantages and features of the present invention will become apparent to those of ordinary skill in the art having read the following detailed description of the preferred embodiments.

### Brief Description of the Drawing

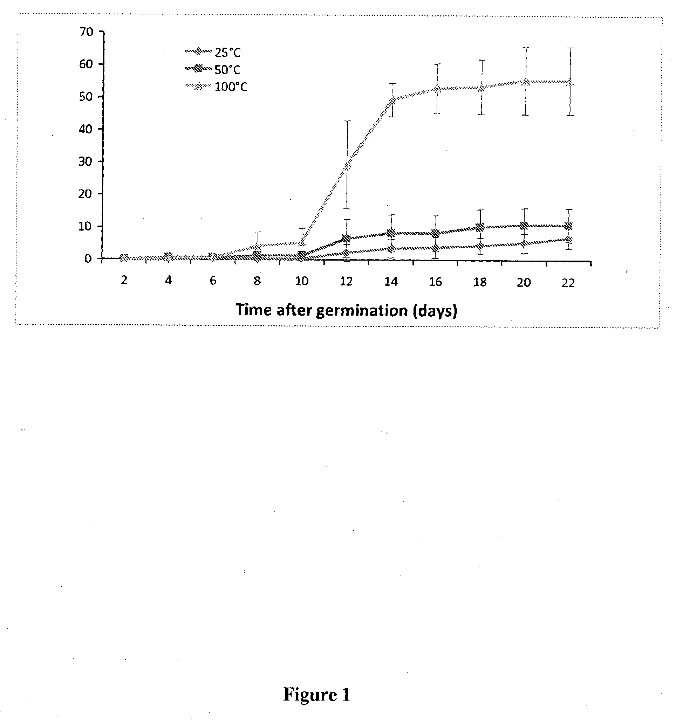

**Figure 1** is a graph showing the effect of temperature on *Cistus libanotis* germination. Prior to germination, seeds were incubated in water for 1 hour at different temperatures (25°C, 50°C or 100°C), as described in Example 3. Data are means ±SD (n>100 for each treatment). This experiment was repeated several times and gave similar results.

### Detailed Description of Certain Preferred Embodiments

As mentioned above, the present invention relates to improved systems and strategies for soil phytoremediation. More specifically, the invention provides for the use of *Cistus libanotis* for lead phytoremediation.

### Cistus Libanotis

*Cistus* (*Cistaceae*) is one of the most characteristic genera of the Mediterranean flora. The adaptation of the genus to Mediterraneean environments is evident from ecological characteristics such as fire-dependent seed germination (Roy and Sonié, J. Appl. Ecol., 1992, 29: 647-655; Trabaud and Renard, Israel J. Plant Sci., 1999, 47: 1-9), insect-dependent pollination (Talavera et al., Plant Syst. Evol., 1993, 186: 123-134), flower-dependent reproduction (Herrera, Ann. Mo. Bot. Gard., 1987, 74: 69-78) and spring-dependent phenology (Herrera, Vegetatio, 1986, 68, 91-98). Thus, *Cistus libanotis* is well-adapted to dry climate.

*Cistus libanotis* has several advantages: it is a perennial plant, which, therefore does not need to be planted every year. In addition, *Cistus libanotis* grows rapidly even when cultivated in an unproductive soil. Furthermore, a great interest in using *Cistus libanotis* in phytoremediation processes is that it has little chance to enter the food chain since the plant is usually not ingested by animals.

### Phytoremediation

As used herein, the term "phytoremediation" refers to the treatment of environmental problems through the use of plants. Phytoremediation consists in depolluting contaminated soils, water or air with plants able to contain, degrade or eliminate metals, pesticides, solvents, explosives, crude oil and its derivatives, and various other contaminants, from the mediums that contain them.

Various phytoremediation processes are known in the art: phytoextraction, phytostabilization, phytotransformation, phytostabilization, phytovolatilization and rhizofiltration.

Phytoextraction refers to a process wherein the plant absorbs contaminants through the root system and stores these contaminants in the root biomass and/or transport them up into the stems and/or leaves. Phytostabilization refers to a process wherein the plant is used to sequester contaminants so that pollutants become less available and livestock, wildlife, and human exposure is reduced. Phytotransformation refers to a process wherein the contaminant is modified by the plant metabolism rendering the pollutant less or non-toxic. Phytostimulation refers to a process, wherein the soil microbial activity is enhanced for the degradation of contaminants. Phytovolatilization refers to a process, wherein the toxic substances are removed from soil or water and released into air. Rhizofiltration refers to a process, wherein water is filtrated through a mass of roots to remove toxic substances.

The success of phytoremediation, in general, is dependent on several factors. First, the plant must produce sufficient biomass while accumulating high concentrations of metals. Second, the metal-accumulating plants need to be responsive to agricultural practices that allow repeated planting and harvesting of the metal rich tissue.

It therefore appeared that *Cistus libanotis* exhibits the potential capacity to be used in phytoremediation, in particular in phytostabilization procedures and is capable of reducing the risks of metal mobility and of decreasing subsequent environmental degradation. The use of *Cistus libanotis* in the cleaning of heavy metals-containing soil hence provides a consequent economic and environmental advantage.

### Use of Cistus Libanotis in Phytoremediation

One object of the invention is the use of *Cistus libanotis* for lead phytoremediation.

In one embodiment of the invention, *Cistus libanotis* is used for phytoextraction of lead.

In another embodiment of the invention, *Cistus libanotis* is used for lead phytostabilization. This embodiment is of great interest as it inhibits lead particles volatilization and reduces dissemination of lead through wind and water thus preventing exposure of animals and humans to lead.

In another embodiment of the invention, *Cistus libanotis* is used for lead rhizofiltration.

### Methods of Phytoremediation using Cistus Libanotis

The invention is also directed to a method for removing lead from contaminated soils using *Cistus libanotis*.

As used herein, the term "contaminated soils" refers to a soil wherein lead is present exceeding an environmental standard value prescribed by regulation or by law and exceeding a value considered to have a negative effect on human health. Thus, in certain embodiments, the term lead contaminated soils refers to soils comprising more than 50 mg/kg of lead. The concentration of lead in a soil sample may be determined by any suitable method. Generally, lead concentration is determined by physico-chemical techniques such as mass spectrometry.

Contaminated soils to which the invention can be applied include any soil where a plant can be cultivated such as industrial lands, agricultural lands, residential lands, and natural soils such as mountains, forests and the like, but also any medium where a plant can be cultivated by suitable treatment such as slime, sludge and the like.

In particular, another object of the invention is a phytoremediation method comprising absorbing a heavy metal contained in a contaminated soil by using a metal-hyperaccumulator plant to clean the soil, wherein the heavy metal is lead and the metal hyperaccumulator plant is *Cistus libanotis*.

In certain embodiments, a phytoremediation method of the invention comprises a step of: growing a *Cistus libanotis* plant in a contaminated medium containing an excessive amount of lead under conditions where the plant accumulates lead, whereby the lead content of the medium is decreased. The contaminated medium may be contaminated soil (as described above), contaminated water, and any medium where a plant can be grown. In certain preferred embodiments, the contaminated medium is a contaminated soil.

In the practice of the present invention, the *Cistus libanotis* plant can be seeded directly in the contaminated soil or, alternatively, it can be seeded and germinated in another place and then planted, as a plantlet, in the contaminated soil.

In certain embodiments of the invention, the phytoremediation method further comprises a step of: harvesting the *Cistus libanotis* plant that has accumulated lead. For example, the *Cistus libanotis* plant may be harvested every 3 to 5 years.

The background concentration of lead in *Cistus libanotis* is about 10 mg/kg. Generally, at the time of harvest, the concentration of lead accumulated in the *Cistus libanotis* plant is above the background concentration. Preferably, at the time of harvest, the concentration of lead accumulated in the *Cistus libanotis* plant is at least the hyper-accumulation concentration of lead. A plant is said to be a hyperaccumulator if it can concentrate a pollutant in a minimum percentage which varies according to the pollutant involved. In the case of lead, the hyper-accumulation concentration is 1000 mg/kg of dry weight. Therefore, in preferred embodiments, at the time of harvest, the concentration of lead accumulated in the *Cistus libanotis* plant is at least 1000 mg/kg.

In certain embodiments of the invention, the phytoremediation method further comprises a step of: treating the *Cistus libanotis* plant harvested. The step of treating the *Cistus libanotis* may comprise: incinerating the *Cistus libanotis* plant harvested to obtain ashes containing lead, and performing a post-treatment of the ashes. The post-treatment of those ashes may be done by vitrification with plasma arc, as described in U.S. Pat. No. 6,532,768, which discloses a process designed to render inert by vitrification any type of solid waste or residue containing, for example heavy metals, such as lead, that must be destroyed, transformed or trapped for recycling or storage. Thus, in certain preferred embodiments, the post-treatment of the ashes containing lead is performed to destroy, transform or trap the lead contained in the ashes thereby allowing its lead storage or recycling.

In certain embodiments of the invention, the phytoremediation method further comprises a step of: adding a biodegradable chelating agent to the contaminated medium (*e.g*., contaminated soil) during the step of growing the *Cistus libanotis* plant. The biodegradable chelating agent is generally added in order to improve absorption of lead by *Cistus libanotis*.

Examples of such biodegradable chelating agent include, but are not limited to, methylglycine diacetate (MGDA), ethylene succinic acid (EDTS), L-glutamic acid diacetate (GLDA), L-aspartic acid diacetate (ASDA), any suitable salt thereof, and any mixture thereof. In contrast, ethylenediamine tetraacetic acid (EDTA) is not a suitable chelating agent for use in the practice of the present invention. Indeed since EDTA, which is known to have the high lead dissolving ability, is non-degradable, it would remain in a soil, and may cause secondary environmental contaminant.

The amount of biodegradable chelating agent to be added to the contaminated soil may be different depending on the concentration of heavy metals in the soil, the nature of the soil, the types of biodegradable chelating agent used, the ability of the biodegradable chelating agent to dissolve out heavy metals in a soil, and the type of addition method used as well as the timing of the biodegradable chelating agent addition. One skilled in the art will know how to determine the suitable amount to be added based on the above factors. In general, the amount of biodegradable chelating agent will vary from 0.01 to 100 mmol/kg.

The biodegradable chelating agent may be added to the contaminated soil (or more generally to the contaminated medium) by any suitable method known in the art. In certain embodiments, the biodegradable chelating agent may be added by a method of spraying or sprinkling granules, powder or an aqueous solution of the chelating agent directly to the soil. However, in certain embodiments, for example when the concentration of the aqueous solution of biodegradable chelating agent is high, the aqueous solution can be added to the contaminated soil by a method that prevents direct contact of the chelating agent with the *Cistus libanotis* plant.

The biodegradable chelating agent may be added to the contaminated before the *Cistus libanotis* plant is introduced in the contaminated soil (*i.e.,* before it is seeded or planted) and/or it can be added at a predetermined time after introduction of the *Cistus libanotis* plant. In certain embodiments, the amount of biodegradable chelating agent added may be chosen so that the chelating agent is present in a soil only for a predetermined period of time before the *Cistus libanotis* plant is harvested.

### Examples

The following examples describe some of the preferred modes of making and practicing the present invention. However, it should be understood that the examples are for illustrative purposes only and are not meant to limit the scope of the invention. Furthermore, unless the description in an Example is presented in the past tense, the text, like the rest of the specification, is not intended to suggest that experiments were actually performed or data were actually obtained.

### Example 1: Measurements on Site

In order to identify plants tolerant to lead, the present inventors have surveyed plant species growing on two mining sites (Touissit & Boubker) and one industrial site (smelting work, Oued El Heimer) located in Morocco and that were known to be contaminated with lead and a control site in a nearby area. The area chosen for this study is located in eastern Morocco near Oujda.

Twenty five (25) soil samples and 67 plant samples were collected on these sites. Fifteen (15) water samples were also collected on the different sites. The plant samples were washed with distilled water to remove any surface contamination. The soil samples correspond to the top 15 cm of soil. Plant and soil samples were oven-dried at 70°C for 48 hours prior to analysis. Total heavy metals were extracted by nitric acid-perchloric acid digestion. Metal contents were measured by Inductively Coupled Plasma-Atomic Emission Spectroscopy (ICP-AES).

The analysis of the soil samples (the results of which are presented in Table 1) showed that the soils tested contained a high concentration of lead particularly Station 2 (Oued El Heimer). Plants including *Cistus libanotis* growing in these conditions were tolerant to lead. Moreover, the present inventors found that *Cistus libanotis* plants accumulated lead in their aerial tissues (Table II) at concentrations above the threshold defining lead hyper-accumulator plants (> 1000 mg/kg). Maximum Pb concentration was observed in plants growing in soils containing the highest levels of Pb available thus showing that the concentration of lead is affected by the soil. However, even the plants growing in a soil containing little Pb (Station 2) were found to be able to accumulate lead at a high concentration.

**Table I. Concentration of heavy metals in the soil samples (mg.kg⁻¹). Contamination threshold for Pb is 50mg.kg⁻¹.**

| **Sample** | **Al** | **As** | **Cd** | **Cu** | **Ni** | **Pb** | **Zn** |
|---|---|---|---|---|---|---|---|
| **Control** | 26388.6 | ≤ 0.36 | ≤ 0.03 | 6.49 | 20.61 | 24.00 | 9.18 |

| **Oued El Heimer** | | | | | | | |
|---|---|---|---|---|---|---|---|
| **Station 2** | 8505.27 | 6.62 | 8.93 | 9.77 | 0.48 | 724.97 | 95.92 |
| **Station 4** | 1487.31 | 10.33 | 0.52 | 0.36 | ≤ 0.1 | 26.38 | 527.52 |

**Table II. Concentration of heavy metals in Cistus libanotis plants from Oued El Heimer (mg.kg⁻¹).**

| **Sample** | **Al** | **As** | **Cd** | **Cu** | **Ni** | **Pb** | **Zn** |
|---|---|---|---|---|---|---|---|
| **Plant 1 (Station 2)** | 540.88 | 11.39 | 9.65 | 13.51 | 0.78 | 1820.80 | 89.01 |
| **Plant 2 (Station 4)** | 371.93 | 7.94 | 6.91 | 12.38 | 0.97 | 923.03 | 1297.06 |

### Example 2: Additional Measurements

In order to confirm the results obtained on site, lead accumulation was also analyzed under controlled conditions (*i.e.*, in the laboratory instead of on-site). *Cistus libanotis* seeds were germinated and grown *in vitro* in Petri dishes containing ½ Murashigue and Skoog medium in a growth chamber (25°C (±3°C), 16 hours of light) for 3 weeks. Seedlings were then transferred to hydroponic tanks containing Broughton and Dillworth liquid medium (BD, pH 6.6) and grown for 2 more weeks. Then they were transferred to BD liquid medium containing 1mM lead nitrate and without phosphate (to avoid lead precipitation).

The metal content was then analyzed at different times (4 plants/time point) after transfer to a lead-containing medium. Plant samples were oven-dried at 70°C for 48 hours prior to analysis. Total heavy metals were extracted by nitric acid-perchloric acid digestion. Meal contents were measured, as in Example 1, by ICP-AES.

*Cistus libanotis* plants were able to grown on BD medium containing 1 mM of lead nitrate. The analysis of the plant samples (see results presented in Table 3) showed that these plants grown on lead-containing medium rapidly accumulated lead in their aerial parts. The lead accumulation was above the threshold defining lead hyper-accumulator plants (> 1000 mg/kg) thus confirming the hyperccumulating status of this plant.

**Table III. Lead concentration (mg.kg⁻¹) in Cistus libanotis plants grown on lead-containing BD medium. Values are average for 4 plants per timepoint.**

| **Time after transfer to Pb containing medium (days)** | **Pb in aerial parts** (mg.kg⁻¹) |
|---|---|
| **0** | 0 |
| **6** | 1577.98 |
| **14** | 14810.42 |

### Example 3: Protocol for Efficient Germination of Cistus Libanotis

In order to determine the best conditions for an efficient germination of *Cistus libanotis,* seeds were first incubated in water at 25°C, 50°C or 100°C for 1 hour with occasional shaking. Seeds can then be germinated either directly on soil or *in vitro.* For the *in vitro* germination, the seeds were sterilized using 50% bleach (v/v) in water for 10 minutes, rinsed 3 times in sterile water and then transferred to Petri dishes containing ½ Murashigue and Skoog medium at 25°C (±3°C) under long day conditions (16 hour-day, 8 hour-night). As can be seen on Figure 1, the treatment at 100°C was found to greatly enhance the germination rate.

### Other Embodiments

Other embodiments of the invention will be apparent to those skilled in the art from a consideration of the specification or practice of the invention disclosed herein. It is intended that the specification and examples be considered as exemplary only, with the true scope of the invention being indicated by the following claims.

## Claims

1. Use of *Cistus libanotis* for lead phytoremedication.

2. The use of *Cistus libanotis* according to claim 1, for lead phytoextraction.

3. The use of *Cistus libanotis* according to claim 1, for lead phytostabilization.

4. A phytoremediation method comprising a step of:
growing a plant in a contaminated medium containing an excessive amount of lead under conditions where the plant accumulates lead, whereby the lead content of the medium is decreased, **characterized in that** the plant is *Cistus libanotis*.

5. The phytoremedication method according to claim 4, wherein the *Cistus libanotis* plant is grown from a seed and wherein, prior to germination, the seed is incubated in water at 100°C for 1 hour with occasional shaking.

6. The method according to claim 4 or claim 5, wherein the contaminated medium is contaminated soil and the lead content of the contaminated soil is higher than 50 mg/kg.

7. The method according to any one of claims 4-6 further comprising a step of:
adding a biodegradable chelating agent to the contaminated medium in which the *Cistus libanotis* plant is grown.

8. The method according to claim 7, wherein the biodegradable chelating agent is selected from the group consisting of methylglycine diacetate (MGDA), ethylene succinic acid (EDTS), L-glutamic acid diacetate (GLDA), L-aspartic acid diacetate (ASDA), any salt thereof, and any mixture thereof.

9. The method according to any one of claims 4-8 further comprising a step of:
harvesting the *Cistus libanotis* plant that has accumulated lead.

10. The method according to any one of claims 4-9, wherein, at harvest time, the *Cistus libanotis* plant has accumulated a concentration of lead of at least 1000 mg/kg.

11. The method according to any one of claims 4-10 further comprising steps of:
incinerating the *Cistus libanotis* plant harvested to obtain ashes containing lead; and
treating the ashes obtained.

12. The method according to claim 11, wherein the ashes obtained are treated by vitrification with a plasma arc whereby the lead is rendered inert.

## Patentansprüche

1. Verwendung von *Cistus libanotis* zur Blei-Phytoremediation.

2. Die Verwendung von *Cistus libanotis* gemäß Anspruch 1 zur Blei-Phytoextraktion.

3. Die Verwendung von *Cistus libanotis* gemäß Anspruch 1 zur Blei-Phytostabilisierung.

4. Ein Phytoremediationsverfahren, umfassend einen Schritt des: Wachsenlassens einer Pflanze in einem kontaminierten Medium, das eine übermäßige Menge an Blei enthält, unter Bedingungen, in denen die Pflanze Blei akkumuliert, wodurch der Bleigehalt des Mediums abnimmt, **dadurch gekennzeichnet, dass** die Pflanze *Cistus libanotis* ist.

5. Das Phytoremediationsverfahren gemäß Anspruch 4, wobei die *Cistus libanotis* Pflanze aus einem Samen wachsen gelassen wird und wobei das Saatgut vor dem Keimen in Wasser bei 100°C für 1 Stunde unter gelegentlichem Schütteln inkubiert wird.

6. Das Verfahren gemäß Anspruch 4 oder Anspruch 5, wobei das kontaminierte Medium kontaminiertes Erdreich ist und der Bleigehalt des kontaminierten Erdreichs mehr als 50 mg/kg beträgt.

7. Das Verfahren gemäß einem der Ansprüche 4 bis 6, darüber hinaus umfassend einen Schritt des: Zugebens eines biologisch abbaubaren Chelatbildners zum kontaminierten Medium, in dem die *Cistus libanotis* Pflanze wachsen gelassen wird.

8. Das Verfahren gemäß Anspruch 7, wobei der biologisch abbaubare Chelatbildner ausgewählt ist aus der Gruppe bestehend aus Methylglycindiacetat (MGDA), Ethylenbernsteinsäure (EDTS), L-Glutaminsäurediacetat (GLDA), L-Asparaginsäurediacetat (ASDA), einem Salz davon und einem Gemisch davon.

9. Das Verfahren gemäß einem der Ansprüche 4 bis 8, darüber hinaus umfassend einen Schritt des: Erntens der *Cistus libanotis* Pflanze, die Blei akkumuliert hat.

10. Das Verfahren gemäß einem der Ansprüche 4 bis 9, wobei die *Cistus libanotis* Pflanze zum Zeitpunkt der Ernte eine Bleikonzentration von mindestens 1000 mg/kg akkumuliert hat.

11. Das Verfahren gemäß einem der Ansprüche 4 bis 10, darüber hinaus umfassend die Schritte: des Veraschens der geernteten *Cistus libanotis* Pflanze, um Asche zu erhalten, die Blei enthält; und des Behandelns der erhaltenen Asche.

12. Das Verfahren gemäß Anspruch 11, wobei die erhaltene Asche durch Verglasen mit einem Plasmabogen behandelt wird, wodurch das Blei inert gemacht wird.

## Revendications

1. Utilisation de *Cistus libanotis* pour la phytoremédiation de plomb.

2. Utilisation de *Cistus libanotis* selon la revendication 1, pour la phyto-extraction de plomb.

3. Utilisation de *Cistus libanotis* selon la revendication 1, pour la phytostabilisation de plomb.

4. Procédé de phytoremédiation comprenant une étape de :
culture d'une plante dans un milieu contaminé contenant une quantité excessive de plomb dans des conditions où la plante accumule du plomb, moyennant quoi la teneur en plomb est réduite, **caractérisé en ce que** la plante est *Cistus libanotis.*

5. Procédé de phytoremédiation selon la revendication 4, dans lequel la plante *Cistus libanotis* est cultivée à partir d'une graine et dans lequel, avant la germination, la graine est incubée dans de l'eau à 100° C pendant 1 heure en agitant de temps à autre.

6. Procédé selon la revendication 4 ou la revendication 5, dans lequel le milieu contaminé est de la terre et la teneur en plomb de la terre contaminée est supérieure à 50 mg/kg.

7. Procédé selon l'une quelconque des revendications 4 à 6, comprenant en outre une étape :
d'addition d'un agent chélateur biodégradable au milieu contaminé dans lequel la plante *Cistus libanotis* est cultivée.

8. Procédé selon la revendication 7, dans lequel l'agent chélateur biodégradable est choisi dans le groupe constitué du diacétate de méthylglycine (MGDA), de l'acide éthylène-succinique (EDTS), du diacétate d'acide L-glutamique (GLDA), du diacétate d'acide L-aspartique (ASDA), de tout sel de ceux-ci et de tout mélange de ceux-ci.

9. Procédé selon l'une quelconque des revendications 4 à 8, comprenant en outre une étape de :
récolte de la plante *Cistus libanotis* qui a accumulé du plomb.

10. Procédé selon l'une quelconque des revendications 4 à 9, dans lequel, au moment de la récolte, la plante *Cistus libanotis* a accumulé une concentration de plomb d'au moins 1000 mg/kg.

11. Procédé selon l'une quelconque des revendications 4 à 10, comprenant en outre les étapes :
d'incinération de la plante *Cistus libanotis* récoltée pour obtenir des cendres contenant du plomb ; et
de traitement des cendres obtenues.

12. Procédé selon la revendication 11, dans lequel les cendres obtenues sont traitées par vitrification avec un arc plasma, moyennant quoi le plomb est rendu inerte.
